# EUROPEAN PATENT APPLICATION

(11) **EP 2 418 853 A2**
(43) Date of publication of application: **15.02.2012**
(21) Application number: 11188631.3
(22) Date of filing: 11.10.2007
(51) Int. Cl.: H04N 7/26, H04N 7/36, H04N 7/50, H04N 13/00

(54) **Picture identification for multi-view video coding**

(30) Priority: 24.10.2006 US 853932 P; 21.11.2006 US 860367 P
(62) Divisional of application: 07852686.0
(71) Applicant: Thomson Licensing, 92130 Issy-les-Moulineaux (FR)
(72) Inventor: Pandit, Purvin, Bibhas, Franklin Park, NJ New Jersey 08823 (US); Su, Yeping, Camas, WA Washington 5750 (US); Yin, Peng, Ithaca, NY New York 14850 (US)
(74) Representative: Rittner, Karsten

(57) **Abstract**

According to a general aspect, a picture from a first view, a picture from a second view, and dependency information are accessed. The dependency information describes one or more inter-view dependency relationships for the picture from the first view. Based on the dependency information, it is determined whether the picture from the first view is a reference picture for the picture from the second view. One application area involves determining whether pictures in a decoded picture buffer are reference pictures for pictures that have not yet been decoded. The pictures in the buffer may be marked to indicate whether they continue to be needed as inter-view reference pictures.

## Description

### TECHNICAL FIELD

The present principles relate generally to video encoding and decoding.

### BACKGROUND

Video decoders may decode a picture and store the picture in memory until the decoder is certain that the decoded picture is no longer needed. Such a decoded picture may be needed, for example, for decoding a subsequent picture that has been encoded based on the decoded picture. In various systems, pictures are encoded as a difference from a previous picture referred to as a "reference picture", and the decoded reference picture is stored at the decoder until all subsequent pictures that used the reference picture have also been decoded. Storing the reference pictures consumes valuable memory at the decoder.

### SUMMARY

According to a general aspect, a picture from a first view, a picture from a second view, and dependency information are accessed. The dependency information describes one or more inter-view dependency relationships for the picture from the first view. Based on the dependency information, it is determined whether the picture from the first view is a reference picture for the picture from the second view.

The details of one or more implementations are set forth in the accompanying drawings and the description below. Even if described in one particular manner, it should be clear that implementations may be configured or embodied in various manners. For example, an implementation may be performed as a method, or embodied as an apparatus configured to perform a set of operations, or embodied as an apparatus storing instructions for performing a set of operations, or embodied in a signal. Other aspects and features will become apparent from the following detailed description considered in conjunction with the accompanying drawings and the claims.

### BRIEF DESCRIPTION OF THE DRAWINGS

FIG. 1 is a block diagram for an exemplary encoder.
FIG. 2 is a block diagram for an exemplary decoder.
FIG. 3 is a diagram for an exemplary inter-view-temporal prediction structure having 8 views and based on the MPEG-4 AVC standard.
FIG. 4 is a diagram for an exemplary method for encoding reference picture management data.
FIG. 5 is a diagram for an exemplary method for decoding reference picture management data.
FIG. 6 is a diagram for an exemplary method for determining inter-view dependency.
FIG. 7 is a diagram for another exemplary method for determining inter-view dependency.
FIG. 8 is a high-level diagram for an exemplary encoder.
FIG. 9 is a high-level diagram for an exemplary decoder.
FIG. 10 is a flow diagram for an implementation of a method of determining dependency.
FIG. 11 is a flow diagram for an implementation of a method of removing stored pictures.

### DETAILED DESCRIPTION

At least one implementation described herein provides a video encoder and/or a video decoder that removes a given decoded picture from memory based on inter-view dependency information. The inter-view dependency information describes one or more inter-view dependency relationships for the given decoded picture. Thus, by accessing information describing, for example, all of the subsequent pictures that depend on the given decoded picture as a reference picture, a video decoder (for example) will then remove the given decoded picture after decoding all of those subsequent pictures. Further implementations mark the given decoded picture after all of those subsequent pictures are decoded, without immediately removing the given decoded picture. The dependency information may be encoded in high-level syntax of, for example, the MPEG-4 AVC Standard based MVC (defined below).

In the current implementation of multi-view video coding (MVC) based on the International Organization for Standardization/International Electrotechnical Commission (ISO/IEC) Moving Picture Experts Group-4 (MPEG-4) Part 10 Advanced Video Coding (AVC) standard/International Telecommunication Union, Telecommunication Sector (ITU-T) H.264 recommendation (hereinafter the "MPEG-4 AVC standard"), the reference software achieves multi-view prediction by encoding each view with a single encoder and taking into consideration the cross-view references. In addition, the current implementation of MVC based on the MPEG-4 AVC Standard (hereinafter "MPEG-4 AVC Standard based MVC") also decouples the frame/picture number (frame_num) and picture order count (POC) between the different views thus allowing pictures with the same frame_num and POC to be present in the decoded picture buffer (DPB). These pictures are differentiated using the view identifier (view_id) associated therewith.

In order to manage the decoded picture buffer, MPEG-4 AVC Standard based MVC uses MPEG-4 AVC compatible memory management control operations (MMCO) commands. These MMCO commands only operate on the pictures with the same view_id as the one that is used to carry these MMCO commands.

This may be too restrictive and, in addition, may not be efficient because by not allowing MMCO commands to mark pictures with the view_id different than itself, the required decoded picture buffer size is typically large. Thus, in order to allow for a smaller decoded picture buffer size (thus using less memory) we should manage the picture in a more efficient way.

In accordance with the MPEG-4 AVC Standard, a picture that is encoded or decoded and available for reference is stored in the decoded picture buffer. The picture is then marked as (a) a short term reference picture or (b) a long term reference picture. Short term reference pictures may be assigned a LongTermPicNum (and "changed" to a long term reference picture) at a later time. This marking process is done using MMCO commands as shown in TABLE 1. TABLE 1 shows decoded reference picture marking syntax. Efficient decoded picture buffer management can be achieved using MMCO commands.

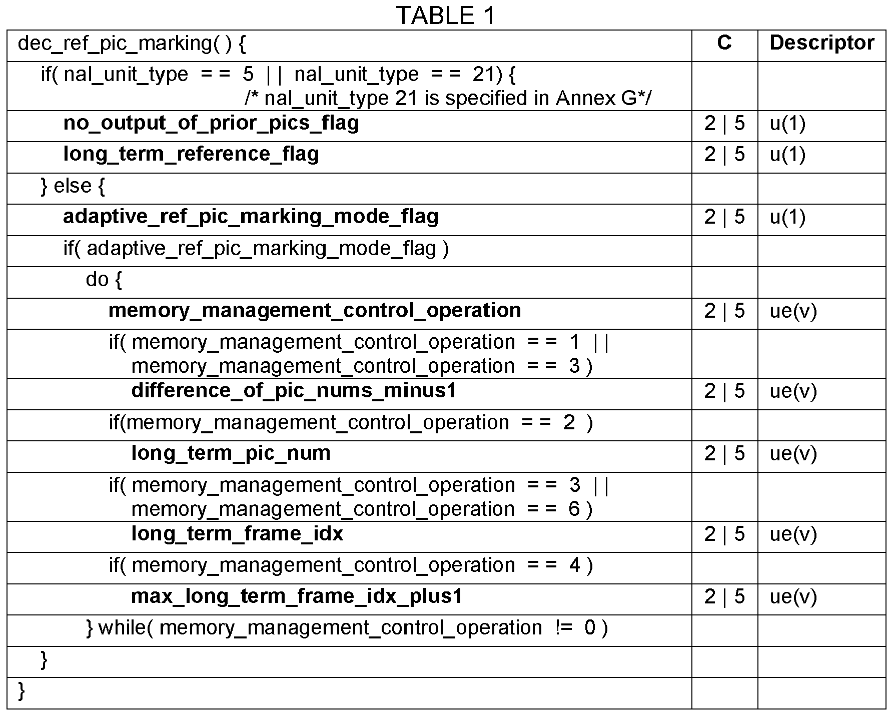

The selection between adaptive reference picture management and sliding window marking is done using the adaptive_ref_pic_marking_mode_flag present in the slice header. An interpretation of adaptive_ref_pic_marking_mode_flag is shown in TABLE 2.

**TABLE 2**

| **adaptive_ref_pic_marking_mode_flag** | **Reference picture marking mode specified** |
|---|---|
| 0 | Sliding window reference picture marking mode: A marking mode providing a first-in first-out mechanism for short-term reference pictures. |
| 1 | Adaptive reference picture marking mode: A reference picture marking mode providing syntax elements to specify marking of reference pictures as "unused for reference" and to assign long-term frame indices. |

The interpretation of each memory management control operation command is shown in TABLE 3. TABLE 3 shows memory management control operation (memory_management_control_operation) values.

**TABLE 3**

| **memory_management_control_operation** | **Memory Management Control Operation** |
|---|---|
| 0 | End memory_management_control_operation syntax element loop |
| 1 | Mark a short-term reference picture as "unused for reference" |
| 2 | Mark a long-term reference picture as "unused for reference" |
| 3 | Mark a short-term reference picture as "used for long-term reference" and assign a long-term frame index to it |
| 4 | Specify the maximum long-term frame index and mark all long-term reference pictures having long-term frame indices greater than the maximum value as "unused for reference" |
| 5 | Mark all reference pictures as "unused for reference" and set the MaxLongTermFrameIdx variable to "no long-term frame indices" |
| 6 | Mark the current picture as "used for long-term reference" and assign a long-term frame index to it |

In one MPEG-4 AVC Standard compatible solution for multi-view video coding, all the video sequences are interleaved into a single sequence. This single interleaved sequence is then fed into an MPEG-4 AVC Standard compatible encoder and produces an MPEG-4 AVC Standard compatible bitstream.

Since this is an MPEG-4 AVC Standard compatible implementation, there is no way to identify to which view any picture belonged. Since frame number (frame_num) and picture order count are assigned without taking this into consideration, the MPEG-4 AVC Standard compatible MMCO commands could achieve efficient decoded picture buffer size management.

In MPEG-4 AVC Standard based MVC, additional syntax has been added in the Sequence Parameter Set, as shown in TABLE 4, to signal the cross view references. TABLE 4 shows Sequence Parameter Set (SPS) multi-view video coding extension syntax. This syntax is used to indicate the cross-view references to be used for anchor and non-anchor pictures in the following way.

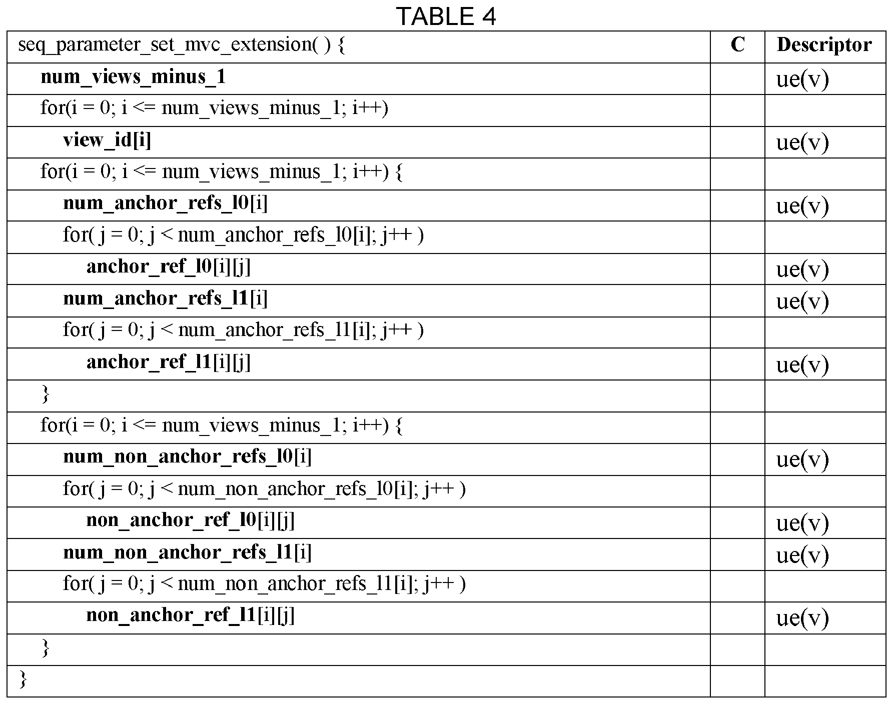

The following procedure shall be conducted to place reference pictures from a view that is different from the current view into the reference prediction lists:
- If the current picture is an anchor picture or a V-IDR picture, then for each value of i from 0 to num_anchor_refs_IX - 1, the picture with view_id equal to anchor_ref_IX[i] and with inter_view_flag equal to 1 and with the same PicOrderCnt() as the current picture shall be appended to RefPicListX.
- Otherwise (the current picture is not an anchor picture and not a V-IDR picture), then for each value of i from 0 to num_non_anchor_refs_IX - 1, the picture with view_id equal to non_anchor_ref_IX[i] and with inter_view_flag equal to 1 and with the same PicOrderCnt() as the current picture shall be appended to RefPicListX.

In this implementation, the memory management control operation commands are associated with the individual views only and cannot mark pictures in other views. As a direct consequence, cross-view reference pictures could stay in the decoded picture buffer longer than necessary since a given cross-view reference picture can only be marked "unused for reference" by a picture of its own view later in the bitstream.

In MPEG-4 AVC Standard based MVC, it is not specified how to distinguish the following cases (also shown in TABLE 5): picture is used for inter-view reference only; picture is used for temporal reference only; picture is used for both inter-view and temporal reference; and picture is not used for reference. TABLE 5 shows reference pictures cases, for temporal and inter-view references.

**TABLE 5**

| **Temporal reference** | **Inter-view reference** |
|---|---|
| 0 | 0 |
| 0 | 1 |
| 1 | 0 |
| 1 | 1 |

The current implementation of the Joint Multi-view Video Model (JMVM) specifies the conditions for a picture that is present in a view other than the current view to be marked as "unused for reference" under certain conditions. These conditions are as follows:
- If the current picture is an anchor picture, then all reference pictures that satisfy the following conditions shall be marked "unused for reference"
- The reference picture has the same PicOrderCnt() as the current picture.
- The reference picture is not necessary for decoding subsequent pictures in decoding order from different views as indicated by anchor_ref_IX (with X being 0 or 1).
- The reference picture is not necessary for decoding subsequent pictures in its own view.
- If the current picture is a not an anchor picture, then all reference pictures that satisfy the following conditions shall be marked "unused for reference"
- The reference picture has the same PicOrderCnt() as the current picture; and
- The reference picture is not necessary for decoding subsequent pictures in decoding order from different views as indicated by non_anchor_ref_IX (with X being 0 or 1).
- The reference picture is not necessary for decoding subsequent pictures in its own view.

Marking pictures that satisfy the above conditions is referred to as "implicit marking". More generally, implicit marking refers to marking that is performed using existing syntax without using additional explicit signaling. It is important to distinguish between the cases shown in TABLE 5, for efficient decoded picture buffer management using implicit marking as described above. It is not clearly specified in MPEG-4 AVC Standard based MVC how this distinction can be achieved.

The Sequence Parameter Set for the multi-view video coding extension as shown in TABLE 4 includes information of which views are used as a reference for a certain view. This information can be used to generate a reference table or other data structure to indicate which views are used as inter-view references and which are not used. Further, this information can be known separately for anchor and non-anchor pictures.

In another approach, a new flag indicates whether a picture is used for inter-view prediction reference. This is signaled in the Network Abstraction Layer (NAL) unit header for a scalable video coding/multi-view video coding extension, and the syntax element nal_ref_idc only indicates whether a picture is used for inter prediction (also referred to as "temporal") reference. Nal_ref_idc is signaled in the network abstraction layer unit syntax table shown in TABLE 6.

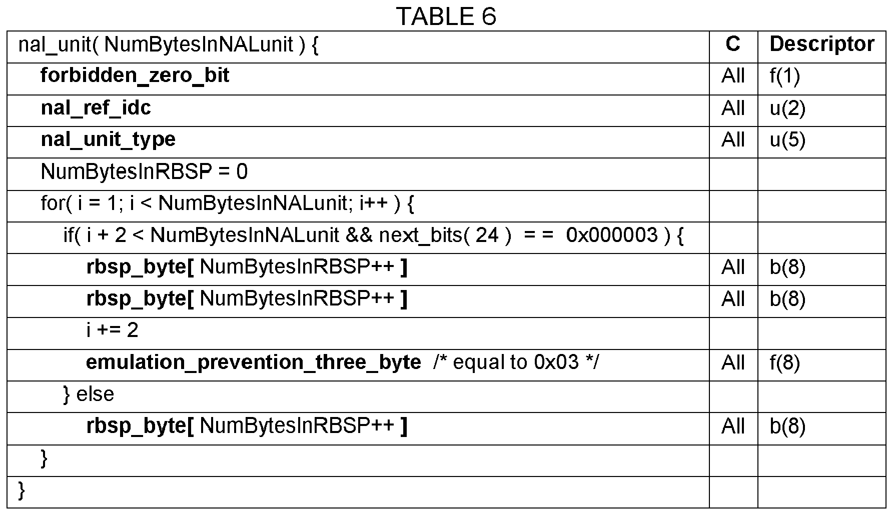

The nal_ref_idc is currently defined with the following semantics:
nal_ref_idc not equal to 0 specifies that the content of the NAL unit including a sequence parameter set or a picture parameter set or a slice of a reference picture or a slice data partition of a reference picture.
nal_ref_idc equal to 0 for a NAL unit including a slice or slice data partition indicates that the slice or slice data partition is part of a non-reference picture.
nal_ref_idc shall not be equal to 0 for sequence parameter set or sequence parameter set extension or picture parameter set NAL units. When nal_ref_idc is equal to 0 for one slice or slice data partition NAL unit of a particular picture, it shall be equal to 0 for all slice and slice data partition NAL units of the picture.
nal_ref_idc shall not be equal to 0 for IDR NAL units, i.e., NAL units with nal_unit_type equal to 5.
nal_ref_idc shall be equal to 0 for all NAL units having nal_unit_type equal to 6, 9, 10, 11, or 12.

The syntax modification is shown below in TABLE 7. TABLE 7 shows Network Abstraction Layer (NAL) Scalable Video Coding (SVC) multi-view video coding extension syntax.

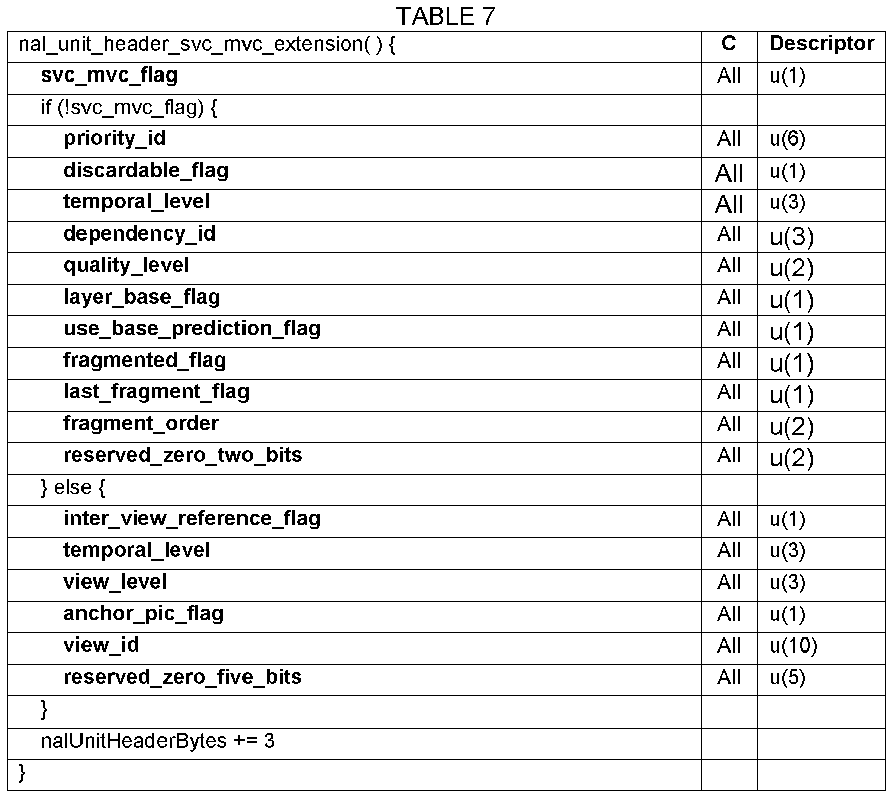

The semantics of inter_view_reference_flag are specified as follows:
inter_view_reference_flag equal to 0 indicates that the current picture is not used for inter-view prediction reference. inter_view_reference_flag equal to 1 indicates that the current picture is used for inter-view prediction reference.
Thus by looking at a combination of nal_ref_idc and inter_view_reference_flag one can determine the type of a given reference picture. TABLE 8 shows nal_ref_idc and inter_view_reference_flag with respect to reference picture type.

**TABLE 8**

| **nal_ref_idc** | **inter_view_reference_flag** | **Type** |
|---|---|---|
| 0 | 0 | Not used as reference |
| 0 | 1 | Inter-view reference only |
| Not equal to 0 | 0 | Temporal reference only |
| Not equal to 0 | 1 | Temporal and inter-view reference |

This method, as is evident, uses additional syntax.

The present description illustrates the present principles. It will thus be appreciated that those skilled in the art will be able to devise various arrangements that, although not explicitly described or shown herein, embody the present principles and are included within its spirit and scope.

All examples and conditional language recited herein are intended for pedagogical purposes to aid the reader in understanding the present principles and the concepts contributed by the inventor(s) to furthering the art, and are to be construed as being without limitation to such specifically recited examples and conditions.

Moreover, all statements herein reciting principles, aspects, and embodiments of the present principles, as well as specific examples thereof, are intended to encompass both structural and functional equivalents thereof. Additionally, it is intended that such equivalents include both currently known equivalents as well as equivalents developed in the future, i.e., any elements developed that perform the same function, regardless of structure.

Thus, for example, it will be appreciated by those skilled in the art that the block diagrams presented herein represent conceptual views of illustrative circuitry embodying the present principles. Similarly, it will be appreciated that any flow charts, flow diagrams, state transition diagrams, pseudocode, and the like represent various processes which may be substantially represented in computer readable media and so executed by a computer or processor, whether or not such computer or processor is explicitly shown.

The functions of the various elements shown in the figures may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" or "controller" should not be construed to refer exclusively to hardware capable of executing software, and may implicitly include, without limitation, digital signal processor ("DSP") hardware, read-only memory ("ROM") for storing software, random access memory ("RAM"), and non-volatile storage.

Other hardware, conventional and/or custom, may also be included. Similarly, any switches shown in the figures are conceptual only. Their function may be carried out through the operation of program logic, through dedicated logic, through the interaction of program control and dedicated logic, or even manually, the particular technique being selectable by the implementer as more specifically understood from the context.

In the claims hereof, any element expressed as a means for performing a specified function is intended to encompass any way of performing that function including, for example, a) a combination of circuit elements that performs that function or b) software in any form, including, therefore, firmware, microcode or the like, combined with appropriate circuitry for executing that software to perform the function. The present principles as defined by such claims reside in the fact that the functionalities provided by the various recited means are combined and brought together in the manner which the claims call for. It is thus regarded that any means that can provide those functionalities are equivalent to those shown herein.

Reference in the specification to "one embodiment" (or "one implementation") or "an embodiment" (or "an implementation") of the present principles means that a particular feature, structure, characteristic, and so forth described in connection with the embodiment is included in at least one embodiment of the present principles. Thus, the appearances of the phrase "in one embodiment" or "in an embodiment" appearing in various places throughout the specification are not necessarily all referring to the same embodiment.

It is to be appreciated that the use of the term "and/or", for example, in the case of "A and/or B", is intended to encompass the selection of the first listed option (A), the selection of the second listed option (B), or the selection of both options (A and B). As a further example, in the case of "A, B, and/or C", such phrasing is intended to encompass the selection of the first listed option (A), the selection of the second listed option (B), the selection of the third listed option (C), the selection of the first and the second listed options (A and B), the selection of the first and third listed options (A and C), the selection of the second and third listed options (B and C), or the selection of all three options (A and B and C). This may be extended, as readily apparent by one of ordinary skill in this and related arts, for as many items listed.

As used herein, "high level syntax" refers to syntax present in the bitstream that resides hierarchically above the macroblock layer. For example, high level syntax, as used herein, may refer to, but is not limited to, syntax at the slice header level, Supplemental Enhancement Information (SEI) level, Picture Parameter Set (PPS) level, Sequence Parameter Set (SPS) level, and Network Abstraction Layer (NAL) unit header level.

Moreover, it is to be appreciated that while one or more embodiments of the present principles are described herein with respect to the MPEG-4 AVC standard, the present principles are not limited solely to this standard or to any standard. Thus, the present principles may be utilized with respect to other video coding implementations and systems, including other video coding standards, recommendations, and extensions thereof, including extensions of the MPEG-4 AVC standard.

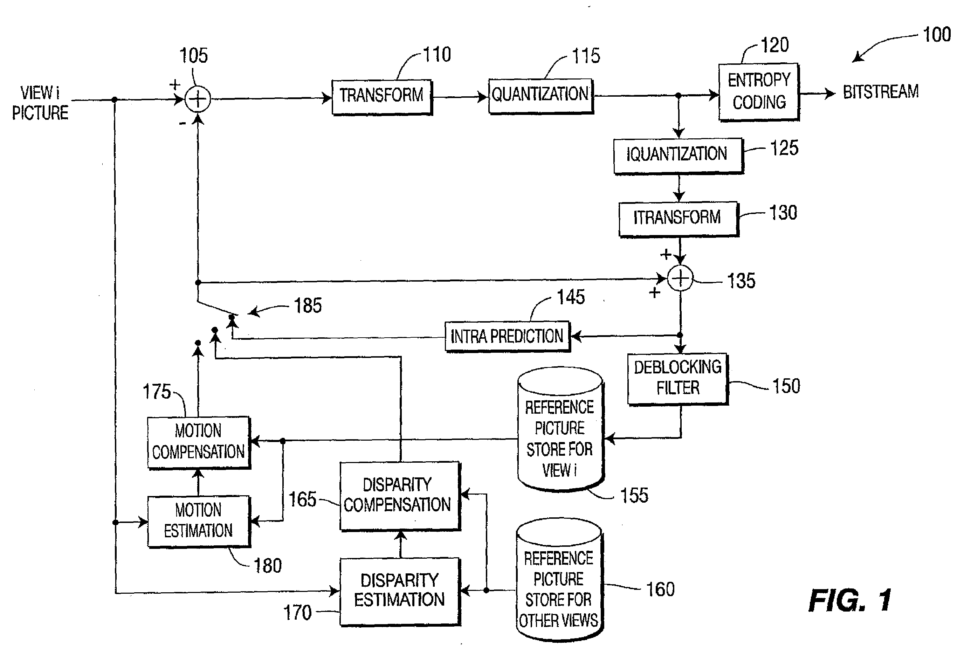

Turning to FIG. 1, an exemplary MVC encoder is indicated generally by the reference numeral 100. The encoder 100 includes a combiner 105 having an output connected in signal communication with an input of a transformer 110. An output of the transformer 110 is connected in signal communication with an input of quantizer 115. An output of the quantizer 115 is connected in signal communication with an input of an entropy coder 120 and an input of an inverse quantizer 125. An output of the inverse quantizer 125 is connected in signal communication with an input of an inverse transformer 130. An output of the inverse transformer 130 is connected in signal communication with a first non-inverting input of a combiner 135. An output of the combiner 135 is connected in signal communication with an input of an intra predictor 145 and an input of a deblocking filter 150. An output of the deblocking filter 150 is connected in signal communication with an input of a reference picture store 155 (for view i). An output of the reference picture store 155 is connected in signal communication with a first input of a motion compensator 175 and a first input of a motion estimator 180. An output of the motion estimator 180 is connected in signal communication with a second input of the motion compensator 175

An output of a reference picture store 160 (for other views) is connected in signal communication with a first input of a disparity estimator 170 and a first input of a disparity compensator 165. An output of the disparity estimator 170 is connected in signal communication with a second input of the disparity compensator 165.

An output of the entropy decoder 120 is available as an output of the encoder 100. A non-inverting input of the combiner 105 is available as an input of the encoder 100, and is connected in signal communication with a second input of the disparity estimator 170, and a second input of the motion estimator 180. An output of a switch 185 is connected in signal communication with a second non-inverting input of the combiner 135 and with an inverting input of the combiner 105. The switch 185 includes a first input connected in signal communication with an output of the motion compensator 175, a second input connected in signal communication with an output of the disparity compensator 165, and a third input connected in signal communication with an output of the intra predictor 145.

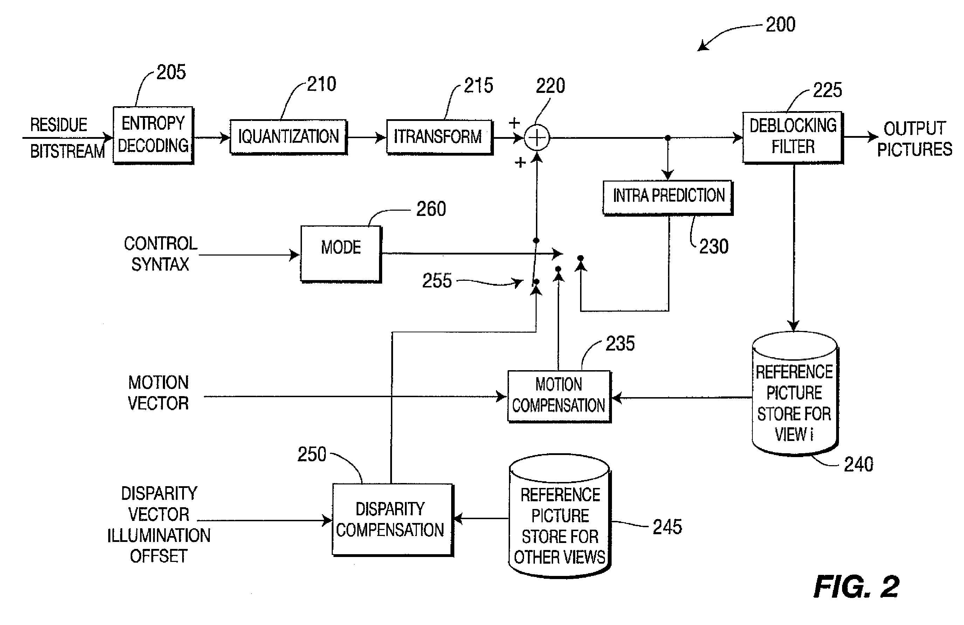

Turning to FIG. 2, an exemplary MVC decoder is indicated generally by the reference numeral 200. Note that encoder 100 and decoder 200 can be configured to perform various methods shown throughout this disclosure. Additionally, the encoder 100 may perform various marking and/or removing functions during a reconstruction process. For example, the encoder 100 may maintain a current state of a decoded picture buffer, so as to mirror the expected actions of a decoder. Consequently, the encoder 100 may perform substantially all of the operations that are performed by the decoder 200.

The decoder 200 includes an entropy decoder 205 having an output connected in signal communication with an input of an inverse quantizer 210. An output of the inverse quantizer is connected in signal communication with an input of an inverse transformer 215. An output of the inverse transformer 215 is connected in signal communication with a first non-inverting input of a combiner 220. An output of the combiner 220 is connected in signal communication with an input of a deblocking filter 225 and an input of an intra predictor 230. An output of the deblocking filter 225 is connected in signal communication with an input of a reference picture store 240 (for view i). An output of the reference picture store 240 is connected in signal communication with a first input of a motion compensator 235.

An output of a reference picture store 245 (for other views) is connected in signal communication with a first input of a disparity compensator 250.

An input of the entropy decoder 205 is available as an input to the decoder 200, for receiving a residue bitstream. Moreover, an input of a mode module 260 is also available as an input to the decoder 200, for receiving control syntax to control which input is selected by the switch 255. Further, a second input of the motion compensator 235 is available as an input of the decoder 200, for receiving motion vectors. Also, a second input of the disparity compensator 250 is available as an input to the decoder 200, for receiving disparity vectors.

An output of a switch 255 is connected in signal communication with a second non-inverting input of the combiner 220. A first input of the switch 255 is connected in signal communication with an output of the disparity compensator 250. A second input of the switch 255 is connected in signal communication with an output of the motion compensator 235. A third input of the switch 255 is connected in signal communication with an output of the intra predictor 230. An output of the mode module 260 is connected in signal communication with the switch 255 for controlling which input is selected by the switch 255. An output of the deblocking filter 225 is available as an output of the decoder.

One or more embodiments provide implicit reference picture marking processes for the multi-view video coding extension of the MPEG-4 AVC standard for efficient management of the decoded reference pictures. The implicit marking of decoded reference pictures is derived based on information available at the decoder side, without explicit signaling of marking commands. The proposed implicit marking process can be enabled by a high level syntax.

Also provided are one or more implementations that remove decoded pictures from memory based on dependency information, without explicit signaling of such dependency information. Such removal may be done in conjunction with marking, or without marking.

In the current implementation of multi-view video coding based on the MPEG-4 AVC Standard, the reference software achieves multi-view prediction by encoding each view with a single encoder and taking into consideration the cross-view references. In addition, the current implementation of multi-view video coding also decouples the frame number (frame_num) and picture order count (POC) between the different views thus allowing pictures with the same frame_num and POC to be present in the decoded picture buffer (DPB). These pictures are differentiated using the view_id associated with therewith.

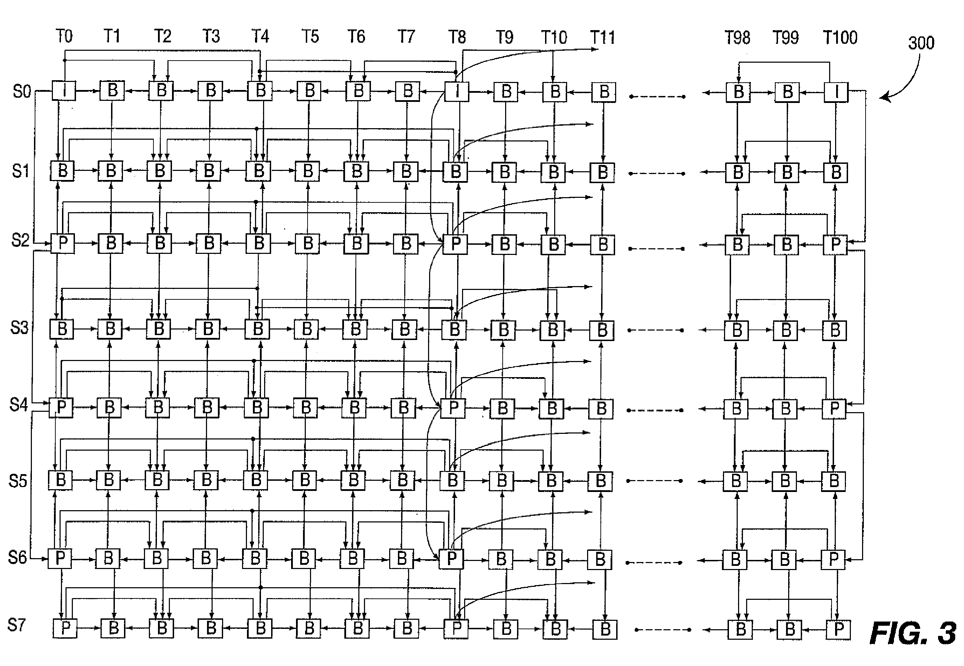

Turning to FIG. 3, an inter-view-temporal prediction structure having 8 views (S0 through S7) and based on the MPEG-4 AVC standard is indicated generally by the reference numeral 300. In FIG. 3, pictures T0-T11 in view S0 are needed only for views S1 and S2, and therefore those pictures are not needed after decoding views S1 and S2. However, in the current implementation of MPEG-4 AVC Standard based multi-view video coding (MVC), these pictures are still marked as used for reference and, thus, require a large decoded picture buffer. These pictures can only be marked (as not being used for reference) in the 1^{st} picture in the next group of pictures (GOP) of that view. Thus, the current implementation of MPEG-4 AVC Standard based MVC does not efficiently manage the decoded picture buffer.

In order to manage the decoded picture buffer, the current implementation uses MPEG-4 AVC Standard compatible MMCO commands. These MMCO commands only operate on the pictures with the same view_id as the one that is used to carry these MMCO commands.

In multi-view video coding, there are different ways to code the set of views. One way is called time-first coding. This can be described as first coding all the pictures from all the views sampled at the same time instance. Returning to FIG. 3, this would imply coding S0-S7 sampled at T0 followed by S0-S7 sampled at T8, S0-S7 sampled at T4, and so on.

Another way is called view-first coding. This can be described as first coding a set of pictures from a single view sampled at different time instances followed by a set of pictures from another view. Returning again to FIG. 3, this would imply coding T0-T8 for view S0, followed by T0-T8 of view S2, T0-T8 of view S1, and so on.

In order to be efficient in managing decoded reference pictures, at least one implementation provides for marking (as not being needed as a reference picture) decoded reference pictures with a different view_id than the current view without explicit signaling of marking commands. For a picture that is used for cross-view reference but not for temporal reference, the decoder can mark the picture "unused for reference" after decoding all pictures that refer to the picture as cross-view references.

It is to be appreciated that, given the teachings of the present principles provided herein, one of ordinary skill in this and related arts can readily extend the proposed idea on implicit decoded reference marking to other marking commands, such as "marking as long-term reference picture", while maintaining the spirit of the present principles.

The Sequence Parameter Set (SPS) defines syntax that describes the dependency structure between the difference views. This is shown in TABLE 4. From TABLE 4, the implicit marking process can derive the dependency map/graph which can indicate the complete dependency for the views. Thus, at any given time, this derived map/graph can be consulted to determine which pictures from a view can be marked as "unused for reference".

As a brief example, the inter-view dependency information of Figure 3 can be generated from the information in Table 4. For the implementation assumed in Figure 3, the number of views will be known. Additionally, for a given view (view_id[i]): (1) all of the inter-view references are the same for each anchor time, and (2) all of the inter-view references are the same for each non-anchor time.

Then, for a given view, the number of inter-view anchor references are indicated by the sum of num_anchor_refs_l0[i] (having a value of, for example, j1) and num_anchor_refs_l1 [i] (having a value of, for example, j2). The individual anchor references for the given view "i" are listed in the two lists indexed by anchor_ref_l0[i][j] (for example, for j=1 to j1) and anchor_ref_l1[i][j] (for example, for j=1 to j2).

Analogously, for a given view, the number of inter-view non-anchor references are indicated by the sum of num_non_anchor_refs_l0[i] (having a value of, for example, j1) and num_non_anchor_refs_l1 [i] (having a value of, for example, j2). The individual non-anchor references for the given view "i" are listed in the two lists indexed by non_anchor_ref_l0[i][j] (for example, for j=1 to j1) and non_anchor_ref_l1 [i][j] (for example, for j=1 to j2).

The status of whether a picture is needed for temporal references can be signaled in multiple ways. For example, the status can be signaled in the nal_ref_idc syntax in nal unit header. Moreover, the status can be indicated in the temporal level if such information exists for temporal scalability. In such cases, pictures with the highest temporal_level are not used for temporal references. Further, the status can be indicated by some other high-level syntax such as, for example, a syntax that explicitly says that the picture is only used for temporal reference.

The following is one embodiment for performing implicit decoded reference marking. If a picture is not used for temporal reference but is used for cross-view references, then the decoder marks it "unused for reference" when the following condition is satisfied: all pictures that use the current picture as a cross-view reference picture have been coded.

By enabling implicit reference picture marking, we can efficiently manage cross-view reference pictures without changing the existing marking process and without changing the syntax in the MPEG-4 AVC Standard.

It is an encoder's choice to determine whether to code the multi-view video coding sequences as time-first or view-first. This information needs to be conveyed to the decoder so that the correct implicit marking can be derived. Thus, we propose to include a flag as a high-level syntax to signal the type of coding scheme. We call this flag mvc_coding_mode_flag. In one embodiment, this flag is signaled in the Sequence Parameter Set (SPS) as shown in TABLE 9. TABLE 9 shows Sequence Parameter Set (SPS) multi-view video coding (MVC) extension syntax. The semantics for this flag can be described as follows:

mvc_coding_mode_flag indicated whether the MVC sequence uses time-first or view-first coding scheme. When mvc_coding_mode_flag is equal to 1, then the MVC sequence is encoded as time-first. When mvc_coding_mode_flag is equal to 0, then the MVC sequence is encoded as view-first.

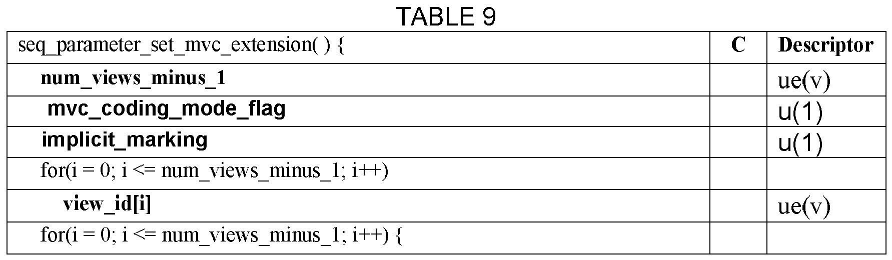

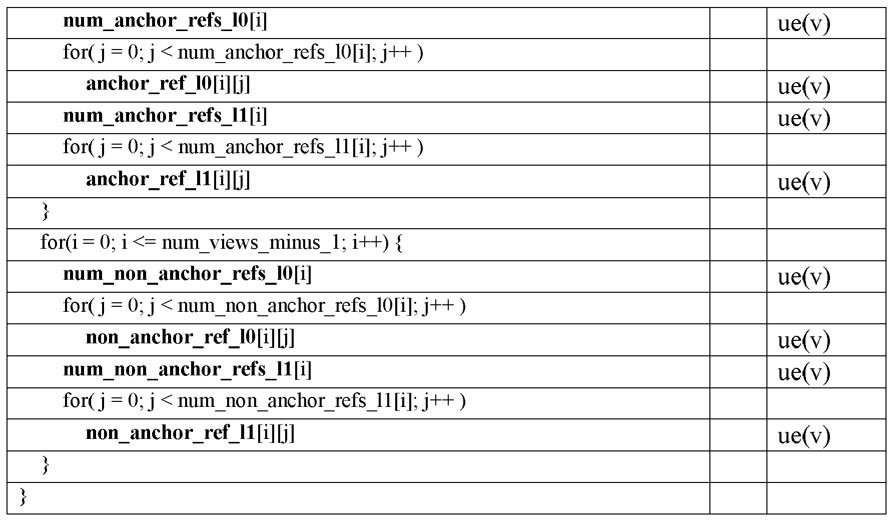

Let us presume that the method of coding the multi-view video coding sequence is time-first. It can be seen from FIG. 3 that there are certain pictures (T1, T3 ...) in the even views (S0, S2 ...) which are only used as cross-view (also referred to as "inter-view") references and are not used as temporal references. These pictures will have the highest temporal level. Such pictures may be identified by a special flag in the bitstream to indicate that they are only cross-view pictures. It can be seen that once these pictures have been used for cross-view reference they are no longer needed and can be marked as unused for either temporal or cross-view reference. For example, once (S1, T1) has referenced (S0, T1), (S0, T1) is not needed.

Additionally there are pictures (T1, T3 ...) in the odd views (S1, S3 ...) which are not used for reference in temporal or cross-view. Such pictures will also have the highest temporal level and may be non-reference pictures. Using implicit marking we can mark these pictures as unused for reference (either temporal or inter-view).

In an embodiment, we propose to introduce a flag as a high level syntax which will enable or disable this implicit marking process. We call this flag, implicit_marking. In one embodiment, this flag is signaled in the Sequence Parameter Set (SPS) as shown in TABLE 9.

The implicit_marking flag may also be conditioned on the coding scheme that is used. For example, the implicit_marking flag may only be used when the coding scheme is time-first coding. This is shown in TABLE 10. TABLE 10 shows Sequence Parameter Set (SPS) multi-view video coding (MVC) extension syntax.

implicit_marking indicates whether the implicit marking process is used to mark pictures as "unused for reference". When implicit_marking is equal to 1, then implicit marking is enabled. If implicit_marking is equal to 0, then implicit marking is disabled.

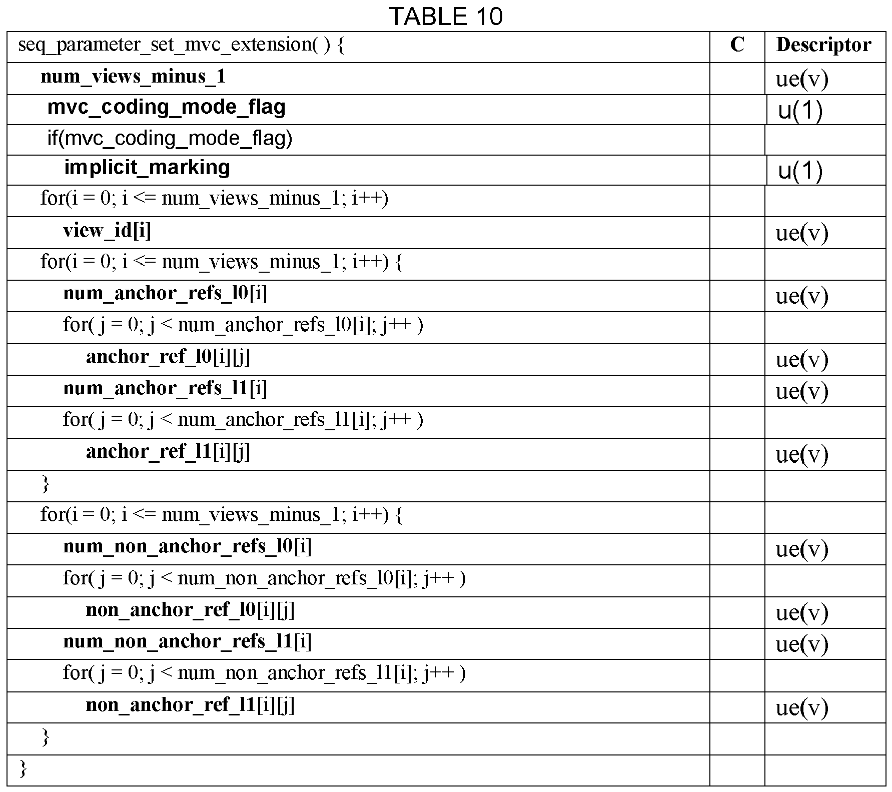

In accordance with one or more embodiments, we propose an approach to implicitly derive information about the type of reference picture. This approach does not require additional syntax and uses the existing syntaxes in the current implementation of the Joint Multi-view Video Model (JMVM).

The current implementation of the Joint Multi-view Video Model (JMVM) includes high level syntax in the Sequence Parameter Set to indicate the inter-view references for a view. It further distinguishes the dependencies of the anchor and non-anchor pictures by separately sending the reference view identifiers. This is shown in TABLE 4, which includes information of which views are used as a reference for a certain view. This information can be used to generate a reference table or other data structure to indicate which views are used as inter-view references and which are not used. Further, this information can be known separately for anchor and non-anchor pictures. In conclusion, by utilizing the reference view information in the Sequence Parameter Set, whether a picture is needed for inter-view prediction can be derived.

In the MPEG-4 AVC Standard, a picture can be identified as a reference picture using the nal_ref_idc present in the Network Abstraction Layer unit header. In the context of multi-view video coding, we use nal_ref_idc only to indicate whether the picture is used for temporal reference (i.e., a reference for its own view).

Using the information from the Sequence Parameter Set of the current implementation of the Joint Multi-view Video Model (JMVM) and nal_ref_idc present in the Network Abstraction Layer unit header (TABLE 7) it is possible to distinguish between the cases shown in TABLE 5. Thus, using the value of the nal_ref_idc along with the reference view information from the Sequence Parameter Set, all the combinations of TABLE 5 can be addressed.

For example, returning to FIG. 3, let us consider the following different cases. Let us presume that view S0 has view_id = 0, S1 has view_id = 1 and S2 has view_id = 2.
For S0:
   The SPS syntax will have the following values, with "i" having a value corresponding to S0:
      **num_anchor_refs_l0[i], num_anchor_refs_l1**[i], **num_non_anchor_refs_l0**[i], **num_non_anchor_refs_l1**[i] all equal to 0.
For S1:
   The Sequence Parameter Set syntax could have the following values, with "i" having a value corresponding to S1, and j=0:
      **num_anchor_refs_l0[i]=**1, **num_anchor_refs_l1**[i]**=**1, **num_non_anchor_refs_l0[i]=**1, **num_non_anchor_refs_l1[i]=**1.
      **anchor_ref_l0**[i][j]**=**0, **anchor_ref_l1**[i][j]**=**2, **non_anchor_ref_l0**[i][j]**=**0, **non_anchor_ref_l1**[i][j]**=**2
For S2:
   The Sequence Parameter Set syntax will have the following values which indicate that this view uses inter-view references for anchor pictures. The indices may be set to "i" having a value corresponding to S2, and j=0.
   **num_anchor_refs_l0[i]=**1, **num_anchor_refs_l1**[i]=0, **num_non_anchor_refs_l0**[i]=0, **num_non_anchor_refs_l1**[i]=0. **anchor_ref_l0**[i][j]=0

So on for S3 through S7.

For all views, pictures at time T1 and T3 will have nal_ref_idc equal to 0. Moreover, pictures at time T0/T2/T4 will have nal_ref_idc not equal to 0.

Using the above information, it can be seen that the following information as shown in TABLE 11 can be derived. Note that all pictures from all views may be categorized using the above methodology, although only one example is provided for each of the four categories.

**TABLE 11**

| **Temporal reference (nal_ref_idc)** | **Inter-view reference (from SPS)** | **Picture type** | **Picture** |
|---|---|---|---|
| 0 | 0 | Not used as reference | S1, T1 |
| 0 | 1 | Inter-view reference only | S2, T1 |
| Not equal to 0 | 0 | Temporal reference only | S1, T2 |
| Not equal to 0 | 1 | Temporal and interview reference | S2, T4 |

Thus, no additional signaling is needed to identify pictures that need to be distinguished for the conditions in TABLE 5.

One application of this derived information is the implicit marking process as described above. Of course, the present principles are not limited solely to applications involving the above-described implicit marking process, and one of ordinary skill in this and related arts will contemplate this and other applications to which the present principles may be applied, while maintaining the spirit of the present principles.

The above methodology can also be used to determine when to remove a picture from memory (for example, a decoded picture buffer). Note that marking need not, but may, be performed. As an example, consider picture S2, T1 which is an inter-view reference only. Assuming an implementation that uses time-first encoding, the views for a given time (which is equivalent for this implementation to having the same picture order count) are encoded in the following order: S0, S2, S1, S4, S3, S6, S5, and S7. One implementation removes S2, T1 from the decoded picture buffer using the following algorithm:
- After decoding a picture in T1 (for example, S1 ,T1), determine if there are other pictures from T1 stored in the decoded picture buffer. This will reveal that S2, T1 is stored in the decoded picture buffer.
- If there are any such other pictures, determine if they are inter-view reference only. This will reveal that S2, T1 is an inter-view reference only picture.
- For each such picture that is an inter-view reference only, consider all views at T1 remaining to be decoded, and determine if any of those views reference the stored picture. For example, determine if any remaining views reference S2.

The last step of considering all remaining views may be performed separately for anchor pictures and for non-anchor pictures. That is, different syntax may be evaluated for anchor pictures and non-anchor pictures. For example, S2, T1 is a non-anchor picture, so the following syntax is potentially evaluated for all subsequent views "i": num_non_anchor_refs_l0[i], num_non_anchor_refs_l1 [i], non_anchor_ref_l0[i][j], and non_anchor_ref_l1 [i][j]. The views subsequent to S1 (the currently decoded view) are S4, S3, S6, S5, and S7. The syntax for these views will reveal that S3 depends on S2. Thus, S2 is not removed. However, after decoding S3, the above algorithm will again consider the stored S2 picture and will reveal that none of the remaining views (S6, S5, and S7) refer to S2. Thus, after decoding S3, S2 is removed from the decoded picture buffer. This will occur after decoding S0, S2, S1, S4, and S3.

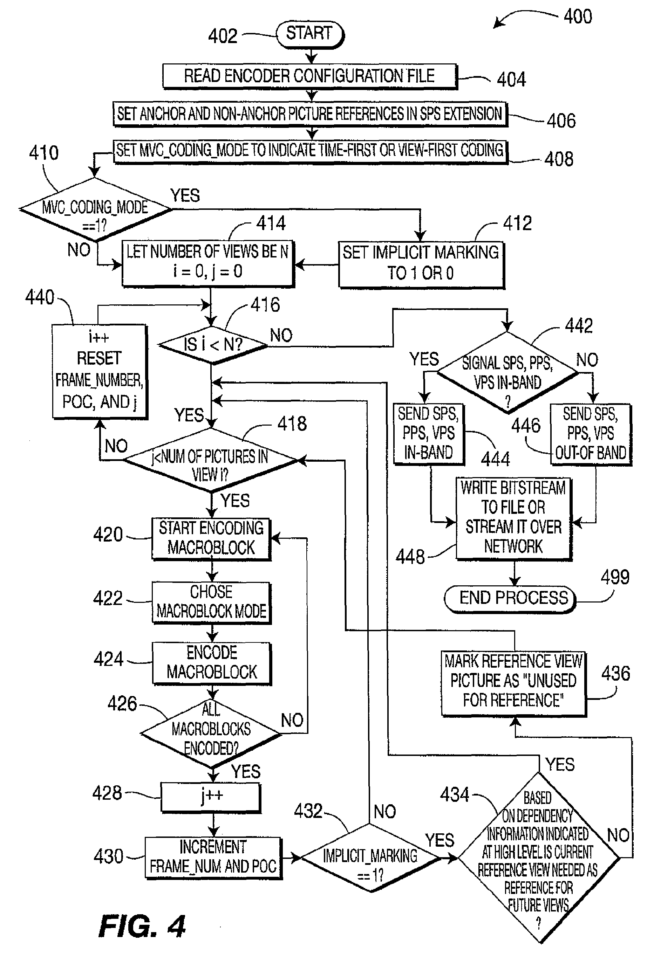

Turning to FIG. 4, an exemplary method for encoding reference picture management data for multi-view video coding is indicated generally by the reference numeral 400.

The method 400 includes a start block 402 that passes control to a function block 404. The function block 404 reads an encoder configuration file, and passes control to a function block 406. The function block 406 sets anchor and non-anchor picture references in a Sequence Parameter Set (SPS) extension, and passes control to a function block 408. The function block 408 sets mvc_coding_mode to indicate time-first or view-first coding, and passes control to a decision block 410. The decision block 410 determines whether or not mvc_coding_mode is equal to one. If so, then control is passed to a function block 412. Otherwise, control is passed to a function block 414.

The function block 412 sets implicit_marking to 1 or 0, and passes control to the function block 414.

The function block 414 lets the number of views be equal to a variable N, and initializes a variable i and a variable j both to 0, and passes control to a decision block 416. The decision block 416 determines whether or not the variable i is less than the variable N. If so, then control is passed to a decision block 418. Otherwise, control is passed to a decision block 442.

The decision block 418 determines whether or not the variable j is less than the number of pictures in view i. If so, then control is passed to a function block 420. Otherwise, control is passed to a function block 440. It can be seen that the implementation of Figure 4 is a view-first encoding implementation. Figure 4 may be adapted to provide an analogous process that performs time-first encoding.

The function block 420 starts encoding a current macroblock of a picture in view i having a given frame-num and POC, and passes control to a function block 422. The function block 422 chooses a macroblock mode, and passes control to a function block 424. The function block 424 encodes the macroblock, and passes control to a decision block 426. The decision block 426 determines whether or not all macroblocks have been encoded. If so, the control is passed to a function block 428. Otherwise, control is returned to the function block 420,

The function block 428 increments the variable j, and passes control to a function block 430. The function block 430 increments frame_num and Picture Order Count (POC), and passes control to a decision block 432. The decision block 432 determines whether or not implicit_marking is equal to 1. If so, then control is passed to a function block 434. Otherwise, control is returned to the decision block 418.

The function block 434 determines, based on dependency information indicated at (in this implementation) a high level, whether or not a (currently evaluated) reference view is needed as a reference for future views. If so, then control is returned to the decision block 418. Otherwise, control is passed to a function block 436.

The function block 440 increments the variable i, resets frame_num, POC, and the variable j, and returns control to the decision block 416.

The function block 436 marks the reference view picture as "unused for reference", and returns control to the decision block 418.

The decision block 442 determines whether or not to signal the Sequence Parameter Set (SPS), the Picture Parameter Set (PPS), and the View Parameter Set (VPS) in-band. If so, then control is passed to a function block 444. Otherwise, control is passed to a function block 446.

The function block 444 sends the SPS, PPS, and VPS in-band, and passes control to a function block 448.

The function block 446 sends the SPS, PPS, and VPS out-of-band, and passes control to the function block 448.

The function block 448 writes the bitstream to a file or streams the bitstream over a network(s), and passes control to an end block 499. It is understood that if the SPS, PPS, or VPS is signaled in-band, then such signaling would be sent with the video data bitstream.

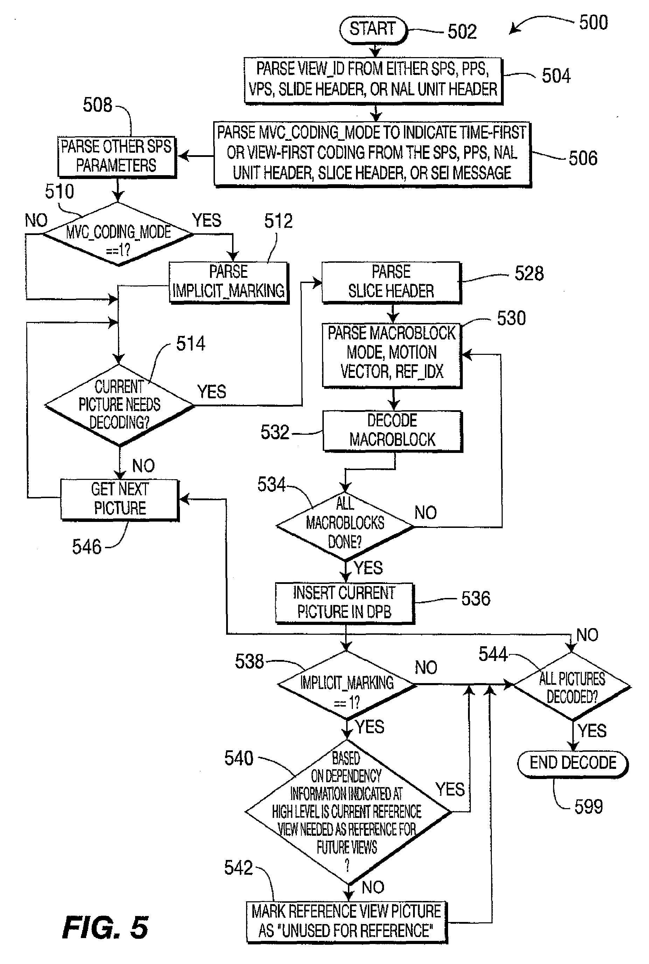

Turning to FIG. 5, an exemplary method for decoding reference picture management data for multi-view video coding is indicated generally by the reference numeral 500.

The method 500 includes a start block 502 that passes control to a function block 504. The function block 504 parses the view_id from the Sequence Parameter Set (SPS), Picture Parameter Set (PPS), View Parameter Set (VPS), slice header, or Network Abstraction Layer (NAL) unit header, and passes control to a function block 506. The function block 506 parses the mvc_coding_mode to indicate time-first or view-first coding from the SPS, PPS, NAL unit header, slice header or Supplemental Enhancement Information (SEI) message, and passes control to a function block 508. The function block 508 parses other SPS parameters, and passes control to a decision block 510. The decision block 510 determines whether or not mvc_coding_mode is equal to 1. If so, then control is passed to a function block 512. Otherwise, control is passed to a decision block 514.

The function block 512 parses implicit_marking, and passes control to a decision block 514. The decision block 514 determines whether or not the current picture needs decoding. If so, then control is passed to a function block 528. Otherwise, control is passed to a function block 546.

The function block 528 parses the slice header, and passes control to a function block 530. The function block 530 parses the macroblock mode, the motion vector, and the ref_idx, and passes control to a function block 532. The function block 532 decodes the current macroblock (MB), and passes control to a decision block 534. The decision block 534 determines whether or not all macroblocks are done. If so, the control is passed to a function block 536. Otherwise, control is returned to the function block 530.

The function block 536 inserts the current picture in the decoded picture buffer (DPB), and passes control to a decision block 538. The decision block 538 determines whether or not implicit marking is equal to 1. If so, the control is passed to a decision block 540. Otherwise, control is passed to a decision block 544.

The decision block 540 determines, based on dependency information indicated at a high level, whether or not the current reference view is needed as a reference for future views. If so, the control is passed to the decision block 544. Otherwise, control is passed to a function block 542.

The decision block 544 determines whether or not all pictures have been decoded. If so, then control is passed to an end block 599. Otherwise, control is returned to the function block 546.

The function block 546 gets the next picture, and returns control to the decision block 514.

Figure 5 provides a decoder implementation that may be used with both view-first encoded data and time-first encoded data.

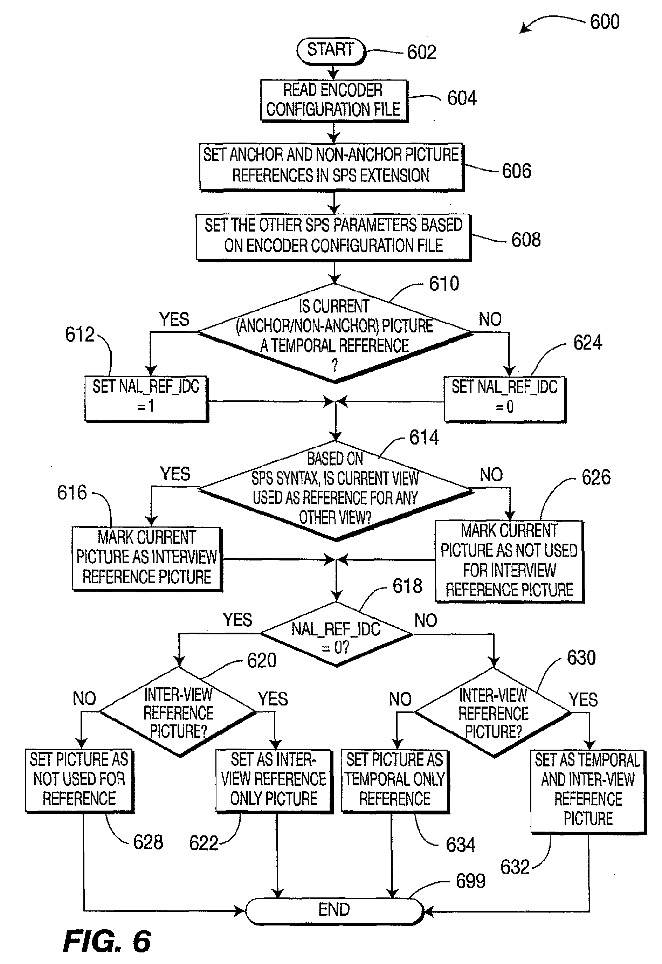

Turning to FIG. 6, an exemplary method for determining inter-view dependency for multi-view video content is indicated generally by the reference numeral 600. In an embodiment, the method 600 is practiced by an encoder such as, for example, encoder 100 of FIG. 1.

The method 600 includes a start block 602 that passes control to a function block 604. The function block 604 reads an encoder configuration file, and passes control to a function block 606. The function block 606 sets anchor and non-anchor picture references in a Sequence Parameter Set (SPS) extension, and passes control to a function block 608. The function block 608 sets the other SPS parameters based on the encoder configuration file, and passes control to a decision block 610. The decision block 610 determines whether or not the current (anchor/non-anchor) picture is a temporal reference. If so, then control is passed to a function block 612. Otherwise, control is passed to a function block 624.

The function block 612 sets nal_ref_idc equal to 1, and passes control to a decision block 614. The decision block 614 determines, based on SPS syntax, whether or not the current view is used as a reference for any other view. If so, the control is passed to a function block 616. Otherwise, control is passed to a function block 626.

The function block 616 marks the current picture as an inter-view reference picture, and passes control to a decision block 618. The decision block 618 determines whether or not nal_ref_idc is equal to 0. If so, then control is passed to a decision block 620. Otherwise, control is passed to a decision block 630.

The decision block 620 determines whether or not the current picture is an inter-view reference picture. If so, then control is passed to a function block 622. Otherwise, control is passed to a function block 628.

The function block 622 sets the current picture as an inter-view reference only picture, and passes control to an end block 699.

The function block 624 sets nal_ref_idc equal to 0, and passes control to the decision block 614.

The function block 626 marks the current picture as not used for any inter-view reference pictures, and passes control to the decision block 618.

The function block 628 sets the current picture as not used for reference, and passes control to the end block 699.

The decision block 630 determines whether or not the current picture is an inter-view reference picture. If so, then control is passed to a function block 632. Otherwise, control is passed to a function block 634.

The function block 632 sets the current picture as a temporal and inter-view reference picture, and passes control to the end block 699.

The function block 634 sets the current picture as a temporal only reference, and passes control to the end block 699.

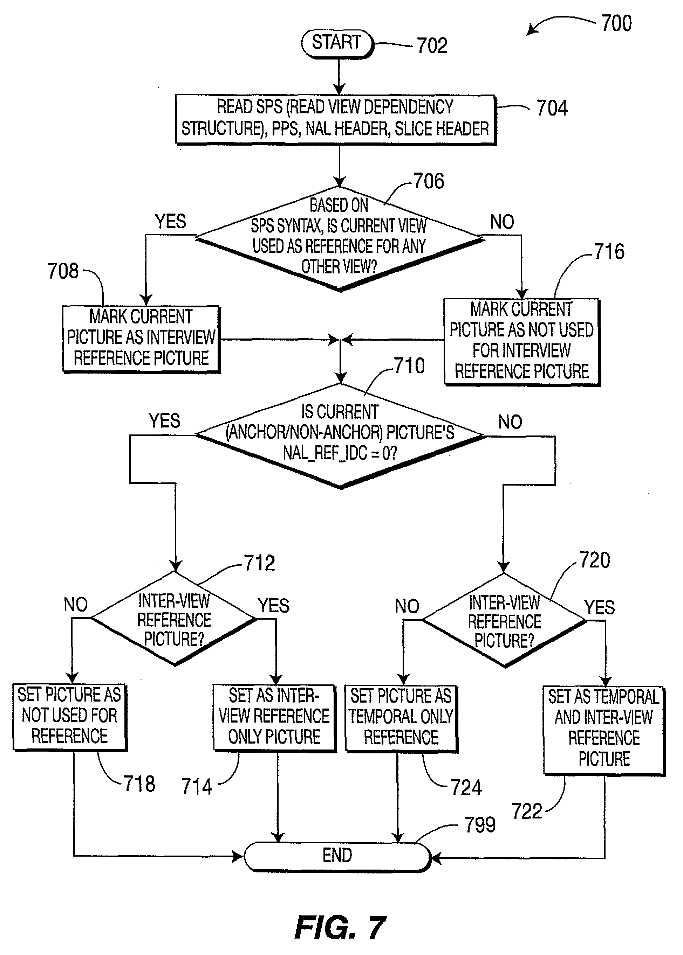

Turning to FIG. 7, an exemplary method for determining inter-view dependency for multi-view video content is indicated generally by the reference numeral 700. In an embodiment, the method 700 is practiced by a decoder such as, for example, decoder 200 of FIG. 2.

The method 700 includes a start block 702 that passes control to a function block 704. The function block 704 reads the Sequence Parameter Set (SPS) (read view dependency structure), Picture Parameter Set (PPS), Network Abstraction Layer (NAL) header, and slice header, and passes control to a decision block 706. The decision block 706 determines, based on SPS syntax, whether or not the current view is used as a reference for any other view. If so, then control is passed to a function block 708. Otherwise, control is passed to a function block 716.

The function block 708 marks the current picture as an inter-view reference picture, and passes control to a decision block 710. The decision block 710 determines whether or not nal_ref_idc is equal to 0. If so, then control is passed to a decision block 712. Otherwise, control is passed to a decision block 720.

The decision block 712 determines whether or not the current picture is an inter-view reference picture. If so, then control is passed to a function block 714. Otherwise, control is passed to a function block 718.

The function block 714 sets the current picture as an inter-view reference only picture, and passes control to an end block 799.

The function block 718 sets the current picture as not used for reference, and passes control to the end block 799.

The function block 716 marks the current picture as not used for inter-view reference pictures, and passes control to the decision block 710.

The decision block 720 determines whether or not the current picture is an inter-view reference picture. If so, then control is passed to a function block 722. Otherwise, control is passed to a function block 724.

The function block 722 sets the current picture as a temporal and inter-view reference picture, and passes control to the end block 799.

The function block 724 sets the current picture as a temporal only reference, and passes control to the end block 799.

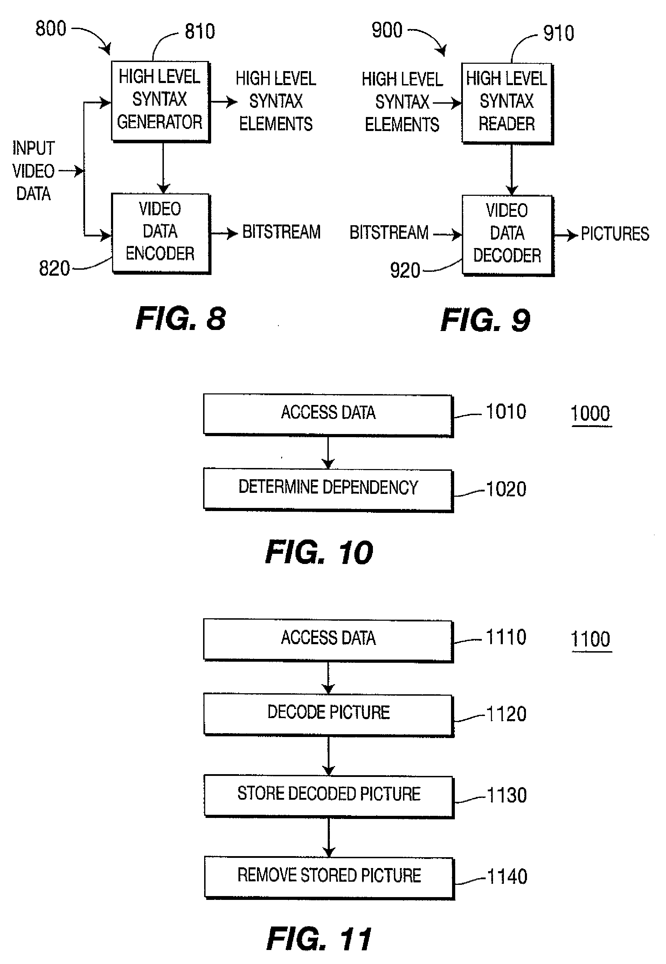

Turning to FIG. 8, a high-level diagram for an exemplary encoder to which the present principles may be applied is indicated generally by the reference numeral 800.

The encoder 800 includes a high level syntax generator 810 having an output in signal communication with an input of a video data encoder 820. An output of the video data encoder 820 is available as an output of the encoder 800, for outputting a bitstream and, optionally, one or more high level syntax elements in-band with the bitstream. An output of the high level syntax generator 810 may also be available as an output of the encoder 800, for outputting one or more high level syntax elements out-of-band with respect to the bitstream. An input of the video data encoder and an input of the high level syntax generator 810 are available as inputs of the encoder 800, for receiving input video data

The high level syntax generator 810 is for generating one or more high level syntax elements. As noted above, as used herein, "high level syntax" refers to syntax present in the bitstream that resides hierarchically above the macroblock layer. For example, high level syntax, as used herein, may refer to, but is not limited to, syntax at the slice header level, Supplemental Enhancement Information (SEI) level, Picture Parameter Set (PPS) level, Sequence Parameter Set (SPS) level and Network Abstraction Layer (NAL) unit header level. The video data encoder 820 is for encoding video data.

Turning to FIG. 9, a high-level diagram for an exemplary decoder to which the present principles may be applied is indicated generally by the reference numeral 900.

The decoder 900 includes a high level syntax reader 910 having an output in signal communication with an input of a video data decoder 920. An output of the video data decoder 920 is available as an output of the decoder 900, for outputting pictures. An input of the video data decoder 920 is available as an input of the decoder 900, for receiving a bitstream. An input of the high level syntax generator 910 is available as an input of the decoder 900, for optionally receiving one or more high level syntax elements out-of-band with respect to the bitstream.

The video data decoder 920 is for decoding video data, including reading high level syntax. Accordingly, if in-band syntax is received in the bitstream then the video data decoder 920 may fully decode the data, including reading the high level syntax. If out-of-band high level syntax is sent, such syntax may be received by the high level syntax reader 910 (or directly by the video data decoder 920).

Referring to Figure 10, a process 1000 is shown. The process 1000 includes accessing data (1010) and determining dependency based on the accessed data (1020). In one particular implementation, the data that is accessed (1010) includes a picture from a first view, a picture from a second view, and dependency information. The dependency information describes one or more inter-view dependency relationships for the picture from the first view. For example, the dependency information may describe that the picture from the first view is a reference picture for the picture from the second view. In the particular implementation, the dependency that is determined (1020) includes a determination of whether the picture from the first view is a reference picture for the picture from the second view.

Referring to Figure 11, a process 1100 is shown. The process 1100 includes accessing data (1110), decoding a picture (1120), storing the decoded picture (1130), and removing the stored picture (1140). In one particular implementation, the data that is accessed (1110) includes a picture from a first view and dependency information. The dependency information describes one or more inter-view dependency relationships for the picture from the first view. For example, the dependency information may describe that the picture from the first view is not a reference picture for any picture with the same picture-order-count that has not yet been decoded. In the particular implementation, the picture from the first view is decoded in operation 1120 and stored into memory in operation 1130. In the particular implementation, the stored decoded picture is removed from memory based on the dependency information (1140). For example, the dependency information may indicate that the picture from the first view is not a reference picture for any picture with the same picture-order-count that has not yet been decoded. In such a case, the picture from the first view is no longer needed as a reference picture and may be removed from the memory.

Note also that in another implementation, operations 1110-1130 are optional and not included. That is, an implementation consists in performing operation 1140. Alternatively, operations 1110-1130 may be performed by one device, and operation 1140 may be performed by a separate device.

It is to be noted that the terms "encoder" and "decoder" connote general structures and are not limited to any particular functions or features. For example, a decoder may receive a modulated carrier that carries an encoded bitstream, and demodulate the encoded bitstream, as well as decode the bitstream.

Further, reference has been made to the use of high level syntax for sending certain information in several implementations. It is to be understood, however, that other implementations use lower level syntax, or indeed other mechanisms altogether (such as, for example, sending information as part of encoded data) to provide the same information (or variations of that information).

Additionally, several implementations are described as "removing" a picture from memory. The term "remove" encompasses any of a variety of actions that has the effect of, for example, removing, cancelling, deleting, de-listing, or de-referencing a picture, or making the picture unusable or inaccessible. As examples, a picture may be "removed" by deallocating memory associated with the picture and giving that memory back to an operating system, or by giving memory back to a memory pool.

Various implementations describe that a picture may depend on another picture (a reference picture). Such dependence may be based on one of several variations of the "reference picture". For example, the picture may be formed as a difference between the picture and either the uncoded original reference picture or the decoded reference picture. Further, regardless of which variation of the reference picture is used as a basis for encoding the given picture, a decoder may use whatever variation is actually available. For example, the decoder may only have access to an imperfectly decoded reference picture. The term "reference picture" is intended to encompass the many possibilities that exist.

The implementations described herein may be implemented in, for example, a method or process, an apparatus, or a software program. Even if only discussed in the context of a single form of implementation (for example, discussed only as a method), the implementation of features discussed may also be implemented in other forms (for example, an apparatus or program). An apparatus may be implemented in, for example, appropriate hardware, software, and firmware. The methods may be implemented in, for example, an apparatus such as, for example, a processor, which refers to processing devices in general, including, for example, a computer, a microprocessor, an integrated circuit, or a programmable logic device. Processing devices also include communication devices, such as, for example, computers, cell phones, portable/personal digital assistants ("PDAs"), and other devices that facilitate communication of information between end-users.

Implementations of the various processes and features described herein may be embodied in a variety of different equipment or applications, particularly, for example, equipment or applications associated with data encoding and decoding. Examples of equipment include video coders, video decoders, video codecs, web servers, set-top boxes, laptops, personal computers, cell phones, PDAs, and other communication devices. As should be clear, the equipment may be mobile and even installed in a mobile vehicle.

Additionally, the methods may be implemented by instructions being performed by a processor, and such instructions may be stored on a processor-readable medium such as, for example, an integrated circuit, a software carrier or other storage device such as, for example, a hard disk, a compact diskette, a random access memory ("RAM"), or a read-only memory ("ROM"). The instructions may form an application program tangibly embodied on a processor-readable medium. As should be clear, a processor may include a processor-readable medium having, for example, instructions for carrying out a process. Such application programs may be uploaded to, and executed by, a machine comprising any suitable architecture. Preferably, the machine is implemented on a computer platform having hardware such as one or more central processing units ("CPU"), a random access memory ("RAM"), and input/output ("I/O") interfaces. The computer platform may also include an operating system and microinstruction code. The various processes and functions described herein may be either part of the microinstruction code or part of the application program, or any combination thereof, which may be executed by a CPU. In addition, various other peripheral units may be connected to the computer platform such as an additional data storage unit and a printing unit.

As should be evident to one of skill in the art, implementations may also produce a signal formatted to carry information that may be, for example, stored or transmitted. The information may include, for example, instructions for performing a method, or data produced by one of the described implementations. Such a signal may be formatted, for example, as an electromagnetic wave (for example, using a radio frequency portion of spectrum) or as a baseband signal. The formatting may include, for example, encoding a data stream, producing syntax, and modulating a carrier with the encoded data stream and the syntax. The information that the signal carries may be, for example, analog or digital information. The signal may be transmitted over a variety of different wired or wireless links, as is known.

It is to be further understood that, because some of the constituent system components and methods depicted in the accompanying drawings are preferably implemented in software, the actual connections between the system components or the process function blocks may differ depending upon the manner in which the present principles are programmed. Given the teachings herein, one of ordinary skill in the pertinent art will be able to contemplate these and similar implementations or configurations of the present principles.

A number of implementations have been described. Nevertheless, it will be understood that various modifications may be made. For example, elements of different implementations may be combined, supplemented, modified, or removed to produce other implementations. Additionally, one of ordinary skill will understand that other structures and processes may be substituted for those disclosed and the resulting implementations will perform at least substantially the same function(s), in at least substantially the same way(s), to achieve at least substantially the same result(s) as the implementations disclosed. In particular, although illustrative embodiments have been described herein with reference to the accompanying drawings, it is to be understood that the present principles is not limited to those precise embodiments, and that various changes and modifications may be effected therein by one of ordinary skill in the pertinent art without departing from the scope or spirit of the present principles. Accordingly, these and other implementations are contemplated by this application and are within the scope of the following claims.

## Claims

1. An apparatus (100, 200, 800, 900) comprising:
means for accessing (1010) a picture from a first view, a picture from a second view, and dependency information describing one or more inter-view dependency relationships for the picture from the first view, and
means for determining (1020), based on the dependency information, whether the picture from the first view is a reference picture for the picture from the second view,
wherein the dependency information comprises inter-view reference indications and a syntax element to indicate whether a picture is used for temporal reference, and the inter-view reference indications and the syntax element are used to determine whether the picture from the first view is an inter-view reference only, a temporal reference, or used for both inter-view and temporal reference.

2. The apparatus of claim 1 wherein the means for accessing comprises an encoder and the accessing comprises encoding the picture from the first view and the picture from the second view, and formatting the dependency information.

3. The apparatus of claim 1 wherein the means for accessing comprises a decoder and the accessing comprises receiving the picture from the first view, the picture from a second view, and the dependency information.

4. The apparatus of claim 1 wherein the apparatus includes a video data decoder (920) that includes:
the means for accessing, and
the means for determining.

5. The apparatus of claim 1 wherein the apparatus further comprises:
a high-level syntax reader for accessing high-level syntax and for generating the dependency information based on the high-level syntax; and
a video data decoder that includes the means for accessing and the means for determining and that is communicatively coupled to the high-level syntax reader for:
receiving the dependency information,
accessing the picture from the first view,
accessing the picture from the second view, and
determining, based on the dependency information, whether the picture from the first view is a reference picture for the picture from the second view.

6. The apparatus of any of the preceding claims, wherein the syntax element to indicate whether the picture is used for temporal reference comprises a nal_ref_idc syntax element.
